Europäisches Patentamt

(19) European Patent Office (11) Publication number: **0 256 017**
Office européen des brevets **B1**

(12) **EUROPEAN PATENT SPECIFICATION**

(45) Date of publication of the patent specification: (51) Int. Cl.⁴: **F 02 B 37/00**
31.01.90

(21) Application number: **86902953.8**

(22) Date of filing: **05.05.86**

(86) International application number:
**PCT/SE 86/00207**

(87) International publication number:
**WO 86/06790 (20.11.86 Gazette 86/25)**

(54) **DEVICE IN TURBO AGGREGATES.**

(30) Priority: **03.05.85 SE 8502167**

(43) Date of publication of application:
**24.02.88 Bulletin 88/8**

(45) Publication of the grant of the patent:
**31.01.90 Bulletin 90/5**

(84) Designated Contracting States:
**AT CH DE FR GB IT LI SE**

(56) References cited:
**DE-A- 304 388**
**DE-A- 2 558 878**
**US-A- 2 547 327**
**US-A- 4 461 150**

(73) Proprietor: **NORDIC MICRO-TURBO AB, Box 101 95, S-100 55 Stockholm (SE)**

(72) Inventor: **OLOFSSON, Sven-Bertil, PL 2096, S-840 13 Torpshammar (SE)**
Inventor: **ARVIDSSON, Folke, Storhagsvägen 6, S-612 00 Finspa ong (SE)**

(74) Representative: **Sedvall, Bengt Gustaf, B. Sedvall Patentbyra Box 7182, S-103 88 Stockholm (SE)**

ACTORUM AG

## Description

The present invention relates to a turbo charger for an especially small internal combustion engine such as a model engine, comprising a turbine wheel driven by the exhaust gases of the engine, an impeller wheel driven by the turbine wheel for supercharging the engine and a housing in which the turbine wheel is mounted and which comprises a circular entrance portion with an inlet slot leading to the turbine wheel and extending over at least a part of said circular entrance portion.

More recently it has become more and more usual to equip internal combustion engines with turbo chargers in order to increase the engine output or as an alternative to get a desired output with a minor engine size. The known turbo chargers have hitherto been constructed for a certain engine type and size, for which reason the use of turbo chargers substantially has been restricted to engines which are manufactured in large series.

One attempt to adapt a turbo charger to different working conditions is disclosed in DE-A-2 558 878 in which the turbine housing is separated into two different ducts of which one may be disconnected. In a working region of the engine with low rpm only one duct is connected with the turbine wheel so that a flowing speed of the exhaust gases is obtained by which the turbine works satisfactorily; with increasing flow of exhaust gases at least one further duct is connected with the turbine wheel.

However, this does not solve the problem to adapt a single turbo charger to engines of varying sizes and manufactured in small series, such as model engines, so that an simple and uncomplicated turbo charger or aggregate may be used in engines of a plurality of sizes.

The object of the invention is, thus, to provide a turbo charger of simple construction which can be adapted to a plurality of engine sizes and this object is obtained thereby that the turbo charger has been imparted the characteristic features stated in the subsequent claims.

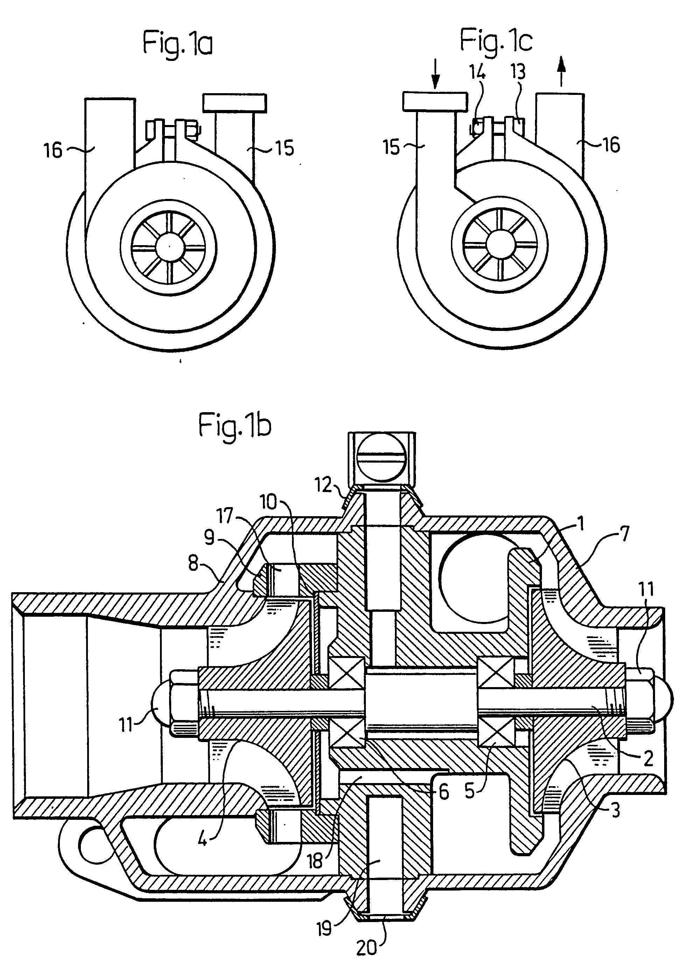

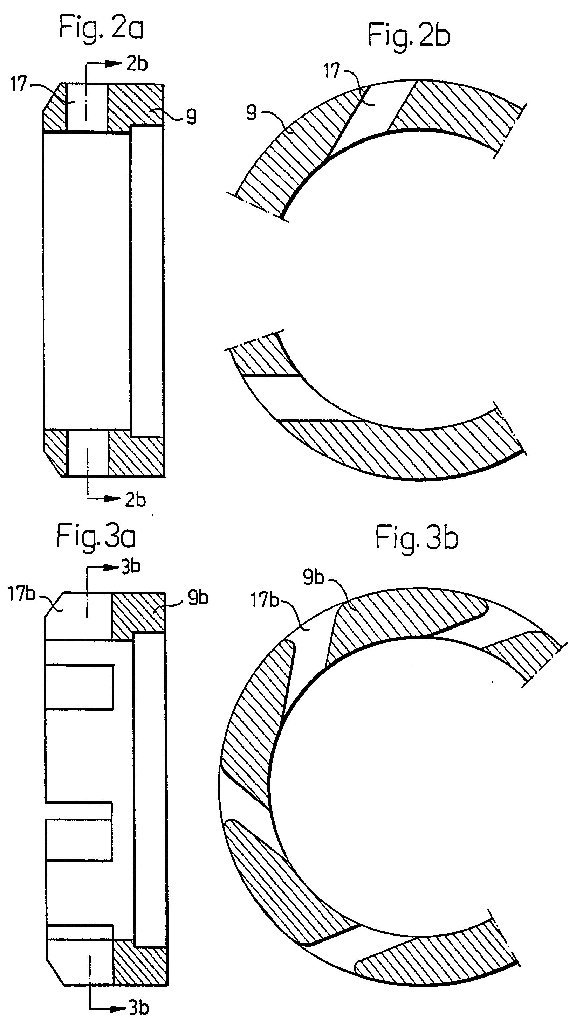

The invention will be described nearer in connection with the (attached) drawings. In that connection Fig. 1 shown a view from the turbine side of the turbo aggregate, Fig. 1b shows a longitudinal section through the turbo aggregate and Fig. 1c shows a view from the impeller side of the turbo aggregate. Fig. 2b shows a cross section through a jet ring which is used in the turbo aggregate according to Fig. 1, whereas Fig. 2b shows a section following the line 2b-2b in Fig. 2a. Figs. 3a and 3b show corresponding sections through another embodiment of the jet ring.

The so-called micro turbo according to the invention described henceforth comprises a central bearing housing 1 with bearing seatings for an impeller bearing 5 and a turbine bearing 6. Mounted in the bearings 5 and 6 is a shaft 2, which at its one end carries an impeller wheel 3 and at its other end a turbine wheel 4. The impeller wheel 3 and the turbine wheel 4 are kept in position on the threaded ends of the shaft 2 by nuts 11. The casing of the turbo aggregate consists of an impeller housing 7 mounted over the impeller wheel 3 and a turbine housing 8 located over the turbine wheel 4. The impeller housing 7 and the turbine housing 8 are at their ends opposing each other provided with bevels which fit corresponding bevels on the bearing part or bearing housing 1, and the three parts, viz. the bearing housing, the impeller housing 7 and the turbine housing 8 are held together by means of a chuck member 12 which has U-shape and the oblique shanks of which fit over corresponding oblique bevelled surfaces on the impeller housing 7 and the turbine housing 8 so that the chuck members 12 when their ends are forced together by means of a screw 13 and a nut 14 clamp the impeller housing 7 and the turbine housing 8 against the bevels on the central bearing housing 1. From the figures 1a and 1c the inlet connection piece 15 to the turbine housing 8 and the outlet connection piece 16 from the impeller housing 7 are evident also.

The turbo aggregate is driven in usual manner thereby that the exhaust gases from an internal combustion engine, in the assumed case a model motor or other minor engine, via the inlet connection piece 15 are supplied to the turbine wheel 4 and drive the same, the turbine wheel then over the shaft 2 also driving the impeller which produces the necessary overpressure on the inlet side of the internal combustion engine through the compressed combustion air which is supplied to the engine from the impeller housing 7 through the exhaust connection pieces 16. In this construction the exhaust diffuser of the impeller is integrated with the bearing housing 1 in such a manner that the air passing therethrough cools the bearing housing and carries away that heat which is introduced from the turbine side in the bearing units of the engine.

In order to render possible to adapt the turbo aggregate to different engine sizes so as to obtain desired gas speed in the exhaust gases which are supplied to the turbine wheel 4 and the required back pressure be developed in the turbine, there is installed a jet ring 9 with a number of inlet holes 17 distributed around the ring and adapted to the size of the engine. Disposed between the inserted jet ring 9 and the bearing housing 1 is a grommet 10 which constitutes a seal between the turbine wheel 4 and the shaft bearings 5 and 6 of the shaft 2. Blocking air to this seal is obtained from the outlet diffuser of the impeller via an aperture 18 in the bearing housing 1.

In the figures 2a and 2b the jet ring 9 is shown in nearer detail, from which it becomes evident that the inlet holes 17 to the turbine wheel 4 are directed slightly tangentially towards said wheel 4. The figures 3a and 3b show another design of the jet ring, here denoted 9b, where the inlet holes 17b extend from the end surface of the jet ring 9b and have rounded inlet edges. Of course, other designs of the jet ring 9 are conceivable with different number of inlet holes 17 and other shape of the same.

The turbo aggregate is intended to be mounted directly on the outlet flange of the engine, a suitable adapter being mounted between the outlet flange of the engine and connection piece 16 is attached to the carburator inlet of the engine, suitably by means of a flexible hose. Upon start of the engine, its exhaust gases will flow through the holes 17 in the jet ring 9 and set the turbine wheel to run. Hereby the turbine wheel 4 drives via the shaft 2 the impeller wheel in such a manner that air under superpressure is supplied to the inlet side of the engine which results in a supercharge effect for the engine.

For the purpose of cooling of the bearing part and preventing the heat from the turbine from being conducted to the impeller part, the bearing part 1 may have a central, circumferentially extending groove 19, and the chuck member have several apertures 20 which connect the groove 19 with the surrounding atmosphere. Of course, other designs of the bearing housing 1 for producing this cooling effect are conceivable also.

From the preceding description it is evident that a turbo aggregate has been created which in a very simple manner by exchange only of the jet ring 9 can be adapted to a plurality of engine sizes. Some reduction of the efficiency may occur, but this is more than well compensated by the advantages of rendering possible to series-produce one sole turbo aggregate for several engine sizes. The shown embodiment which is especially suitable for model engines and other similar small type motors, is very easy to produce and to instal, since all stationary parts in the engine, such as the bearing housing 1, impeller housing 7, turbine housing 8, jet ring 9 and grommet 10 are kept together by means only of a chuck member 12 and screw 13 and nut 14. However, it shall stand clear that the invention is applicable also to turbo aggregates for larger engines, the turbo aggregate then possibly be imparted other structure and design.

## Claims

1. Turbo charger for an especially small internal combustion engine such as a model engine, comprising a turbine wheel (4) driven by the exhaust gases of the engine, an impeller wheel (3) driven by the turbine wheel (4) for supercharging the engine and a housing (8) in which the turbine wheel (4) is mounted and which comprises a circular entrance portion with an inlet slot leading to the turbine wheel (4) and extending over at least a part of said circular entrance portion, characterized by a ring shaped, exchangeable jet member (9) arranged in the circular entrance portion and surrounding the inlet slot, said jet member having a plurality of holes (17) evenly distributed over the entrance slot and connecting the entrance portion with the turbine wheel (4).

2. Turbo charger according to claim 1, characterized in that the entrance area is determined by openings (17) of predetermined number and magnitude in the jet member (9).

3. Turbo charger according to claim 1 or 2, characterized by a central bearing part (1), within which a through shaft (2) is mounted in bearings and which on either side of the bearing parts (1) carries the turbine wheel (4) and the impeller wheel (3) which are surrounded by, respectively, a turbine housing (8) and an impeller housing (7), which housings abut against the bearing part (1) and are kept secured thereto by means of chuck members (12, 13, 14).

4. Turbo charger according to claim 3, characterized in that the turbine housing (8) and the impeller housing (7) are formed with projecting flanges facing each other and kept together by means of a U-shaped chuck member (12) which grasps over said flanges and forces them together with the bearing part (1) located therebetween.

5. Turbo charger according to claim 3 or 4, characterized in that the jet member (9) is kept fixed between the turbine housing (8) and the bearing part (1).

6. Turbo charger according to any of the claims 1-5, characterized in that the holes (17) of the jet member are directed tangentially to the turbine (4).

7. Turbo charger according to any of the claims 3-6. characterized in that the outlet diffuser of the impeller (3) has connection with the bearing part (1) in such a manner that a portion of the impeller air cools the bearing housing and removes heat from the turbine part (4).

8. Turbo charger according to any of the claims 3-7, characterized by a grommet (10) disposed between the turbine (4) and the bearing part (1) and forming a seal between the turbine (4) and the bearing part (1).

9. Turbo charger according to claim 8, characterized in that a duct (18) connects the outlet diffuser of the impeller (3) with a space between the bearing part (1) and the grommet (10).

## Patentansprüche

1. Turbolader, insbesondere für kleine Brennkraftmaschinen, wie Modellmotoren, mit einem durch die Abgase des Motors angetriebenen Turbinenlaufrad (4), einem vom Turbinenlaufrad (4) angetriebenen Verdichterlaufrad (3) zum überladen der Maschine, sowie mit einem das Turbinenlaufrad (4) aufnehmenden Gehäuse (8), das ein kreisrundes Eintrittsteil mit einem zum Turbinenlaufrad (4) führenden und sich über wenigstens einen Teil des kreisrunden Eintrittsteils erstreckenden Einlaßschlitz, gekennzeichnet durch einen im kreisrunden Eintrittsteil sitzenden, den Einlaßschlitz umgebenden, ringförmigen, auswechselbaren Strahlkörper (9), der eine Vielzahl von gleichmäßig über den Einlaßschlitz verteilten, den Eintrittsteil mit dem Turbinenlaufrad (4) verbindenden Bohrungen (17) aufweist.

2. Turbolader nach Anspruch 1, dadurch gekennzeichnet, daß die Eintrittsfläche durch eine vorgegebene Anzahl und Größe von Bohrungen (17) im Strahlkörper (9) bestimmt ist.

3. Turbolader nach Anspruch 1 oder 2, gekennzeichnet durch ein mittiges Lagerteil (1) mit einer darin in Lagern (5, 6) aufgenommenen durchgehenden Welle (2), das beiderseits des Lagerteils (1) das Turbinenlaufrad (4) und das Verdichterlaufrad (3) trägt, die jeweils von einem Turbinengehäuse (8) bzw. Ladergehäuse (7) umschlossen sind, wobei diese Gehäuse (7, 8) am Lagerteil (1) anstoßen und daran durch Spannschellen (12, 13, 14) befestigt sind.

4. Turbolader nach Anspruch 3, dadurch gekennzeichnet, daß am Turbinengehäuse (8) und Ladergehäuse (7) vorstehende Stege angeformt sind, die einander zugewandt und durch eine U-förmiges Spannschelle (12) zusammengehalten sind, die die Stege übergreift und zusammenzwingt, wobei das Lagerteil (1) zwischen den Stegen liegt.

5. Turbolader nach Anspruch 3 oder 4, dadurch gekennzeichnet, daß der Strahlkörper (9) zwischen dem Turbinengehäuse (8) und dem Lagerteil (1) festgehalten ist.

6. Turbolader nach einem der Ansprüche 1-5, dadurch gekennzeichnet, daß die Bohrungen (17) im Strahlkörper (9) tangential auf das Turbinenlaufrad (4) gerichtet sind.

7. Turbolader nach einem der Ansprüche 3-6, dadurch gekennzeichnet, daß der Auslaßdiffusor des Verdichterlaufrades (3) eine solche Verbindung mit dem Lagerteil (1) hat, daß ein Teil der Ladeluft das Lagergehäuse kühlt und Hitze vom Turbinenteil (4) ableitet.

8. Turbolader nach einem der Ansprüche 3-7, gekennzeichnet durch eine zwischen dem Turbinenlaufrad (4) und dem Lagerteil (1) angebrachte Isolierscheibe (10), die eine Abdichtung zwischen dem Turbinenlaufrad (4) und dem Lagerteil (1) bildet.

9. Turbolader nach Anspruch 8, dadurch gekennzeichnet, daß ein Kanal (18) den Auslaßdiffusor des Verdichterlaufrades (3) mit einem Zwischenraum zwischen dem Lagerteil (1) und der Isolierscheibe (10) verbindet.

**Revendications**

1. Turbo compresseur pour un moteur à combustion interne particulièrement petit, tel qu'un moteur modèle réduit, comportant une roue de turbine (4) entraînée par les gaz d'échappement du moteur, une roue à aubes (3) entraînée par la roue de turbine (4) pour la suralimentation du moteur et un boîtier (8) dans lequel est montée la roue de turbine (4) et comportant une portion d'entrée circulaire avec une fente d'admission conduisant à la roue de turbine (4) et s'étendant sur au moins une partie de ladite portion d'entrée circulaire, caractérisé en ce qu'il comporte un corps de propulseur annulaire interchangeable (9) aménagé dans la portion d'entrée circulaire et entourant la fente d'admission, ledit corps de propulsuer étant pourvu d'une multitude d'orifices (17) distribués de manière régulière sur la fente d'admission et reliant la portion d'entrée avec la roue de turbine (4).

2. Turbo compresseur suivant la revendication 1, caractérisé en ce que la zone d'entrée est délimitée par les orifices (17), de nombre et de dimensions prédéterminés, du corps de propulsuer (9).

3. Turbo compresseur suivant les revendications 1 et 2, caractérisé en ce qu'il comporte une unité de paliers (1) à l'intérieur de laquelle un arbre débouchant (2) est monté dans des paliers et porte, d'un côté et de l'autre de l'unité de paliers (1), la roue de turbine (4) et la roue à aubes (3) entourées, respectivement, d'un boîtier de turbine (8) et d'un boîtier de roue à aube (7), lesdits boîtiers butant contre l'unité de paliers (17 et étant fixés à celle-ci au moyen de mandrins (12, 13, 14).

4. Turbo compresseur suivant la revendication 3, caractérisé en ce que le boîtier de turbine (8) et le boîtier de roue à aubes (7) comportent des embasements situés l'un en face de l'autre et réunis au moyen d'un mandrin en U (12) qui serre lesdits embasements et les force ensemble, l'unité de paliers (1) étant située entre eux.

5. Turbo compresseur suivant la revendication 3 ou la revendication 4, caractérisé en ce que le corps de propulseur (9) est maintenu fixé entre le boîtier de turbine (8) et l'unité de paliers (1).

6. Turbo compresseur suivant l'une quelconque des revendications 1 à 5, caractérisé en ce que les orifices (17) du corps de propulseur sont dirigés de manière tangentielle à la turbine (4).

7. Turbo compresseur suivant l'une quelconque des revendications 3 à 6, caractérisé en ce que le diffuseur de sortie de la roue à aubes (3) est relié à l'unité de paliers (1) de telle façon qu'une portion de l'air de la roue à aube refroidit le boîtier de paliers et enlève la chaleur de la turbine (4).

8. Turbo compresseur suivant l'une quelconque des revendications 3 à 7, caractérisé en ce qu'il comporte un oeillet (10) disposé entre la turbine (4) et l'unité de paliers (1) et formant un joint entre la turbine (4) et l'unité de paliers (1).

9. Turbo compresseur suivant la revendication 8, caractérisé en ce qu'un conduit (18) relie le diffuseur de sortie de la roue à aube (3) à un espace entre l'unité de palier (1) et l'oeillet (10).

Fig. 1a

Fig. 1c

Fig. 1b

## Fig. 2a

17

→ 2b

g

→ 2b

## Fig. 2b

17

9

## Fig. 3a

17b

→ 3b

9b

→ 3b

## Fig. 3b

9b

17b